# EUROPEAN PATENT SPECIFICATION

(11) **EP 3 088 175 B1**
(45) Date of publication and mention of the grant of the patent: **23.08.2023**
(21) Application number: 16166572.4
(22) Date of filing: 22.04.2016
(51) Int. Cl.: B32B 17/10, G06T 7/80, C03B 33/023, H04N 13/239, H04N 13/246, G06V 20/56

(54) **METHOD FOR MANUFACTURING LAMINATED GLASS AND LAMINATED GLASS**
VERFAHREN ZUR HERSTELLUNG VON VERBUNDGLAS UND VERBUNDGLAS
PROCÉDÉ DE FABRICATION DE VERRE FEUILLETÉ ET VERRE FEUILLETÉ

(30) Priority: 27.04.2015 JP 2015090584; 08.03.2016 JP 2016044855
(43) Date of publication of application: 02.11.2016
(73) Proprietor: Ricoh Company, Ltd., Tokyo 143-8555 (JP)
(72) Inventor: KISHIWADA, Jun, Tokyo, 143-8555 (JP)
(74) Representative: SSM Sandmair

(56) References cited:
- EP-A1- 1 801 079
- EP-A2- 1 343 332
- GB-A- 2 396 005
- JP-A- 2007 290 549
- US-A- 3 700 542
- US-A- 4 632 688

## Description

### BACKGROUND OF THE INVENTION

### 1. Field of the Invention

The present invention relates to methods for manufacturing laminated glass, laminated glasses, methods for calibrating a stereo camera, and calibration systems.

### 2. Description of the Related Art

Recent vehicles are internally equipped with various optical devices such as a headup display and an on-vehicle camera. These optical devices are often used through a windshield. Such a windshield has therefore been needed to have the performance of an optical component. It has been known that, in a manufacturing process of a windshield, temperature and takt time, for example, are managed to approximate the shape of a windshield to design data and eliminate optical distortion.

For example, Japanese Patent Application Laid-open No. 2004-132870 discloses a regulator for a stereo camera for the purpose of regulation regarding optical distortion and a positional shift of a stereo camera by image processing. Japanese Patent Application Laid-open No. H7-010569 discloses detailed conditions for a manufacturing process of sheet glass by the float process for the purpose of reducing a fine corrugation profile formed in the manufacturing process. Japanese Patent Application Laid-open No. 2007-290549 discloses a windshield in which distortions generated in the windshield is made different in direction to reduce distortion when seeing through the windshield, and a manufacturing method of the windshield.

Typical manufacturing techniques known to the inventor, however, have a problem in that under the influence of formation of small waviness profiles formed randomly on the front and the back surfaces of a windshield in a manufacturing process of sheet glass used for the windshield, optical distortion occurs, resulting in small distortion in an image captured by, for example, a camera through the windshield.

Japanese Patent Application Laid-open No. 2004-132870 is similar in that optical distortion and a positional shift of a stereo camera mounted in a vehicle are measured to perform correction so as to mitigate the effect of distortion generated by a windshield. However, because correction regarding the distortion generated by the windshield depending on the positional relation between the camera and the windshield at the time of measurement is performed by image processing, change in the positional relation due to an impact or vibration causes the effect of the distortion generated by the windshield to recur.

Japanese Patent Application Laid-open No. H7-010569 decreases the size of a fine corrugation profile formed on sheet glass to reduce the effect of optical distortion. However, corrugations formed on a surface of sheet glass cannot be completely eliminated, and therefore a windshield manufactured using such sheet glass has small corrugations formed randomly on the front and back surfaces, resulting in optical distortion.

With the disclosure of Japanese Patent Application Laid-open No. 2007-290549, the effect of corrugations formed on sheet glass cannot be sufficiently reduced, and therefore a windshield manufactured using such sheet glass has small corrugations formed randomly on the front and back surfaces. These corrugations result in optical distortion.

US 3,700,542 discloses a safety windshield made of float glass or sheet glass ribbon having lines that correspond to lines of distortion. The windshield is made of laminated glass comprising a first ply of glass and a second ply of glass with a resiness inter-layer material therebetween.

GB 2396005 A discloses a method and device for calibrating an image sensor system in an automotive vehicle in which a stereo camera is aligned with respect to the geometrical axis of travel of the automotive vehicle

US 4,632,688 discloses bent glass sheets which have been heat treated in a roller hearth furnace and subsequently laminated together, whereby corrugations occurring during heat treatment have been matched.

In view of the problems described above, the present invention has an object to reduce an effect of optical distortion resulting from a small waviness profile formed in a manufacturing process of sheet glass.

### SUMMARY OF THE INVENTION

It is an object of the present invention to at least partially solve the problems in the conventional technology.

The present invention is defined by the independent claims. The dependent claims relate to the preferred embodiments of the invention.

The present invention provides an advantageous effect that an effect of optical distortion resulting from a small waviness profile formed in a manufacturing process of sheet glass is reduced.

### BRIEF DESCRIPTION OF THE DRAWINGS

FIGS. 1A to 1D are sectional views of areas of a windshield;
FIG. 2A is an enlarged sectional view illustrating a state of entry/exit of light beams in an unaligned windshield;
FIG. 2B is an enlarged sectional view illustrating a state of entry/exit of light beams in an aligned windshield;
FIG. 3 is a flowchart illustrating manufacturing processes in a windshield manufacturing example 1 of an embodiment;
FIG. 4 is an explanatory view illustrating a sheet glass manufacturing process in windshield manufacturing examples 1 and 2;
FIG. 5 is an explanatory view illustrating a sheet glass cutting process in the windshield manufacturing example 1;
FIG. 6 is an explanatory view illustrating screen printing on sheet glass in the windshield manufacturing examples 1 and 2;
FIG. 7 is an explanatory view illustrating a sheet glass bending process in the windshield manufacturing examples 1 and 2;
FIG. 8 is an explanatory view illustrating a sheet glass bonding process in the windshield manufacturing examples 1 and 2;
FIGS. 9A and 9B are explanatory views illustrating exemplary alignment marks in the windshield manufacturing examples 1 and 2;
FIG. 10 is an explanatory view illustrating a sheet glass cutting process in the windshield manufacturing example 2;
FIG. 11 is an explanatory view illustrating an exemplary configuration of a calibration system in which a stereo camera is disposed in a vehicle with the windshield according to the embodiment;
FIG. 12 is a block diagram illustrating an exemplary configuration of the stereo camera;
FIG. 13 is a block diagram illustrating an exemplary hardware configuration of an information processing device;
FIG. 14 is a block diagram illustrating a functional configuration of the information processing device;
FIG. 15 is an explanatory view illustrating an example of a calibration chart;
FIG. 16 is a flowchart illustrating a procedure of calibration according to the embodiment; and

The accompanying drawings are intended to depict exemplary embodiments of the present invention and should not be interpreted to limit the scope thereof. Identical or similar reference numerals designate identical or similar components throughout the various drawings.

### DETAILED DESCRIPTION OF THE PREFERRED EMBODIMENTS

The following describes in detail an embodiment of a method for manufacturing laminated glass, a laminated glass, a method for calibrating a stereo camera, and a calibration system according to the present invention.

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

### Overview of Windshield

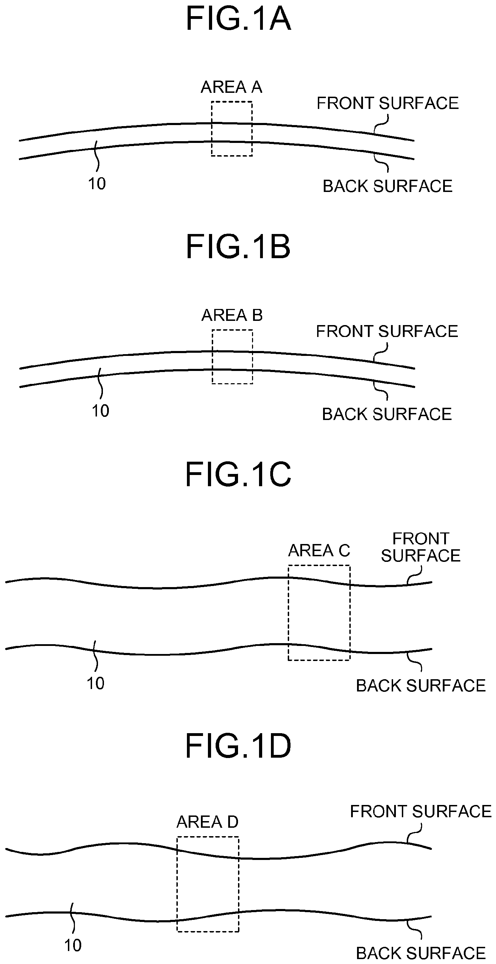

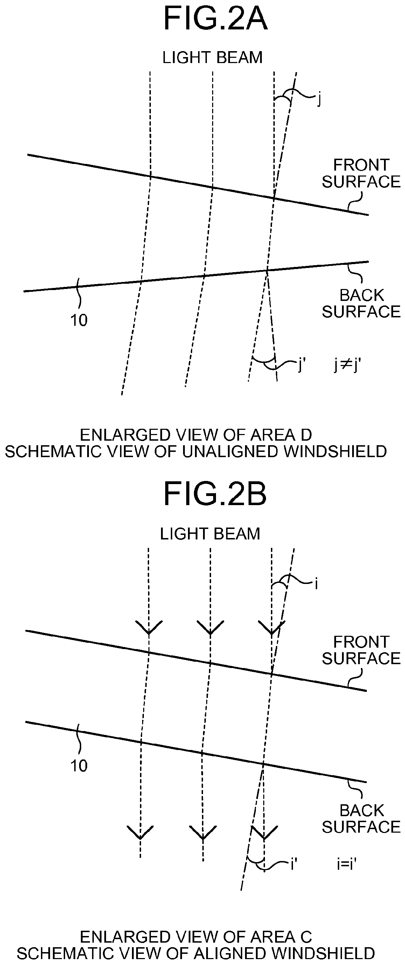

The following describes an overview of a windshield and processing before and after alignment (bonding adjustment) to be described later. FIGS. 1A to 1D are sectional views of areas of a windshield. FIG. 2A is an enlarged sectional view illustrating a state of entry/exit of light beams in an unaligned windshield, and FIG. 2B is an enlarged sectional view illustrating a state of entry/exit of light beams in an aligned windshield.

A windshield 10 has a three-layer structure including two sheets of glass and an anti-shattering film sandwiched between the sheets of glass. The two sheets of glass are manufactured by a method called the float process, during which a profile that look like waves rolling in one direction at a small pitch is formed in the sheets of glass.

The float process mentioned above is a process of floating thin molten glass on molten metal to manufacture sheet-shaped glass. Due to this process, a fine corrugation (wave form) tends to be formed on a surface of the sheet-shaped glass in the flow direction of the glass material.

The manufactured sheets of glass are subjected to heat and formed into a desired shape, and then bonded together with the film sandwiched between the sheets. On the front and back surfaces of a windshield produced through such a manufacturing process of sheet glass, small corrugations due to the float process are scattered randomly.

Sections of the windshield 10 manufactured as described above are illustrated as follows: an area A section in FIG. 1A, an area B section in FIG. 1B, an area C section in FIG. 1C, and an area D section in FIG. 1D. The area A and the area B indicate that the front surface and the back surface of the windshield 10 are approximately parallel which is not in accordance with the invention. The area C indicates in accordance with the invention that the corrugations on the front surface and the back surface of the windshield 10 match with each other. The area D indicates that the corrugations on the front surface and the back surface of the windshield 10 do not match with each other which is not in accordance with the invention.

FIG. 2A illustrates a state of entry/exit of light beams in the area D in a comparative configuration of the windshield 10. As illustrated in the area D section in FIG. 1D, the windshield 10 having random corrugations scattered on the front and back surfaces refracts light beams passing through the windshield 10 at the front and back surfaces in respective different directions (an angle of incidence j ≠ an angle of exit j'). As a result, optical distortion is generated. The windshield 10 has a three-layer structure including sheet glass, an interlayer, and sheet glass, and thus includes four interfaces that refract light.

However, as illustrated in FIG. 2B, when the front surface and the back surface are parallel to each other as in the state of entry/exit of light beams in the area C section in FIG. 1C, refractive indices of the windshield 10 and the interlayer are approximately the same, and thus refraction hardly occurs at the interface between each sheet glass and the interlayer. Therefore, this windshield 10 may be optically regarded as one sheet of glass, and it is enough to consider the corrugation profiles only on the front and the back surfaces of the windshield 10.

The two sheets of glass for the front surface and the back surface of the windshield 10 are aligned and bonded in such a manner that the fine corrugation profiles formed on the sheets of glass are aligned (refer to FIG. 2B). The windshield 10 that has been thus aligned has the same gradient (angle) on the front and back in a microscopic area. As illustrated in FIG. 2B, an incident light beam and an exiting light beam of a light beam passing through the windshield 10 are parallel to each other (the angle of incidence i = the angle of exit i'). Consequently, no small distortion is generated in an image acquired by a stereo camera or other devices through the windshield 10, and thus an effect of optical distortion of a small waviness profile formed in a manufacturing process of sheet glass can be reduced.

In view of the above, in the embodiment, a manufacturing method of a windshield includes aligning and bonding two sheets of glass for the front surface and the back surface of the windshield in such a manner that the fine corrugation profiles formed on the sheets of glass are aligned. This alignment causes an incident light beam and an exiting light beam of a light beam passing through the windshield to be parallel to each other. Thus, no small distortion is generated in an image acquired by a camera or other devices through the windshield. The following describes specific manufacturing examples and the like in detail with reference to the drawings.

### Windshield Manufacturing Example 1

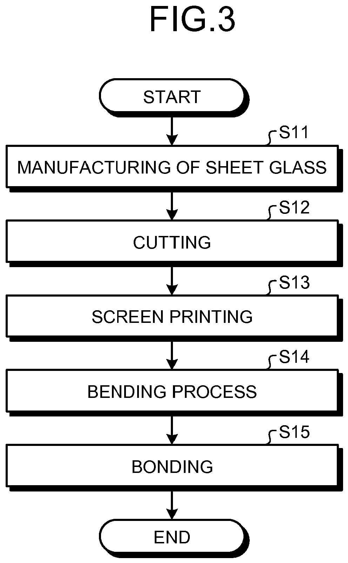

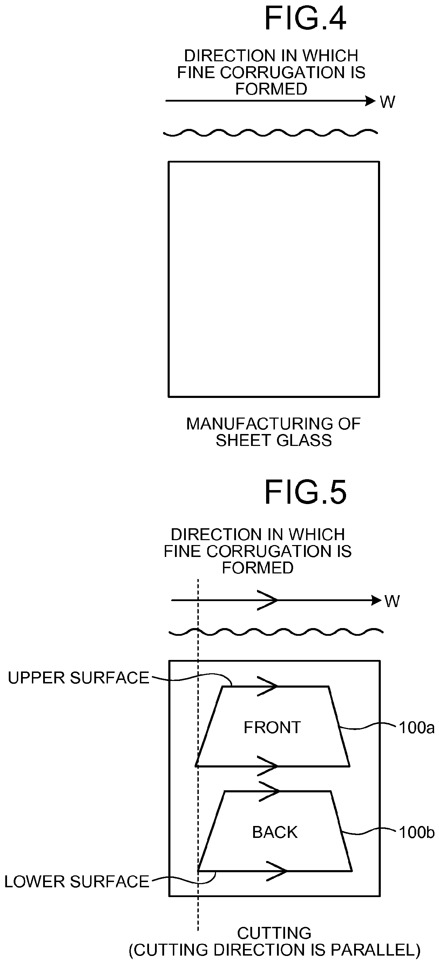

The embodiment describes an example of a windshield 100 that is manufactured as laminated glass with a first glass 100a and a second glass 100b being bonded together. FIG. 3 is a flowchart illustrating manufacturing processes in a windshield manufacturing example 1 of the embodiment. First, sheet glass is manufactured (step S11). As described above, sheet glass used for the windshield 100 is manufactured by the float process, which is a generally known method. In this process, as illustrated in FIG. 4, a fine corrugation profile is formed on the sheet glass in a direction W due to characteristics of this manufacturing method. In the embodiment, the windshield 100 is referred to as laminated glass 100 as appropriate.

Next, the sheet glass manufactured as described above is cut into a shape of the windshield 100 (step S12). When the first glass 100a and the second glass 100b to be used as a front surface and a back surface are cut out of the sheet glass, the upper surfaces and the lower surfaces of the first glass 100a and the second glass 100b are made parallel to the direction W in which the fine corrugation is formed. In addition, the first glass 100a and the second glass 100b to be used as the front surface and the back surface are cut on the same line (refer to FIG. 5). As described above, in a cutting process, the first glass 100a and the second glass 100b are cut out of one sheet of glass having corrugations in a predetermined direction, in such a manner that corresponding sides are cut in the same cutting direction.

The cutting process at step S12 enables bonding at a subsequent bonding process with hardly any misalignment between the corrugations on the first glass 100a and the second glass 100b when subjected to alignment. Specifically, adjusting alignment between the fine corrugation on the first glass 100a and the fine corrugation on the second glass 100b eliminates most of misalignment of the corrugations on the first glass 100a and the second glass 100b.

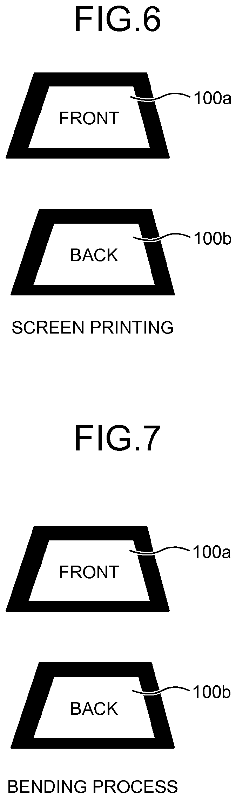

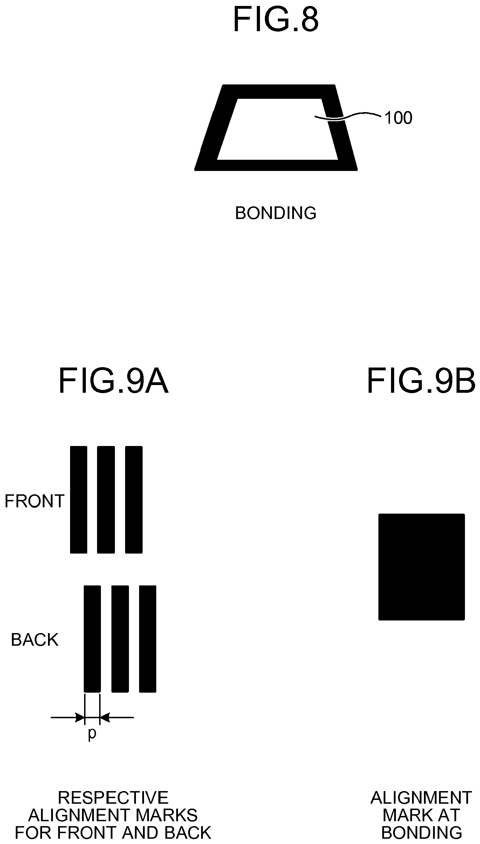

Subsequently, the first glass 100a and the second glass 100b that have been cut out as described above are subjected to black ceramic screen printing as illustrated in FIG. 6 (step S13). A black ceramic is generally used for improving adhesion and durability of an adhesive used to assemble the windshield 100 to a vehicle body, and for improving appearance of the peripheral edge of the windshield 100. In the screen printing, an alignment mark as illustrated in FIG. 9A or FIG. 9B is printed for aligning the corrugations on the two sheets of glass that are the first glass 100a and the second glass 100b.

A pitch p in the alignment mark depends on the pattern of the formed fine corrugation profile. For example, a pitch of approximately 10 mm is sufficient for a corrugation profile formed at a period of 100 mm.

Subsequently, the first glass 100a and the second glass 100b that have been printed with the black ceramic are subjected to a bending process (refer to FIG. 7) (step S14). Subsequently, the first glass 100a and the second glass 100b that have been bent are subjected to a bonding process (refer to FIG. 8) with an interlayer interposed between the first glass 100a and the second glass 100b (step S15). In the bonding process, the first glass 100a and the second glass 100b are bonded together in such a manner that the corrugations are aligned.

When bonding the first glass 100a and the second glass 100b to be used as the font surface and the back surface, the alignment marks of black ceramic described above with reference to FIG. 9A and FIG. 9B are used so that the boding can be performed with accuracy of about one tenth of the formed fine corrugation profile.

By manufacturing the windshield 100 with the manufacturing processes described above, the fine corrugation profiles formed on the front surface and the back surface are aligned and bonding is performed.

### Windshield Manufacturing Example 2

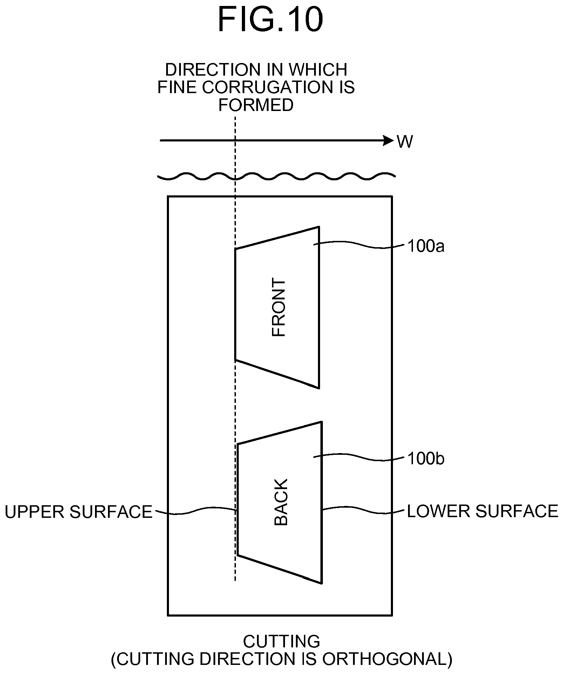

The following describes a windshield manufacturing example 2 that is different from the windshield manufacturing example 1 described above. The windshield manufacturing example 2 uses basically the same processes as illustrated in the drawing, but uses a different cutting process at step S12. Specifically, the sheet glass manufacturing illustrated in FIG. 4, the screen printing illustrated in FIG. 6, the bending process illustrated in FIG. 7, and the bonding process illustrated in FIG. 8 are the same as of the windshield manufacturing example 1. A cutting process illustrated in FIG. 10 is different.

That is, in the cutting process, the upper surfaces and the lower surfaces of the first glass 100a and the second glass 100b are aligned in a direction orthogonal to the direction W in which the fine corrugation is formed, and the first glass 100a and the second glass 100b to be used as the front surface and the back surface are cut on the same line (refer to FIG. 10).

In the windshield manufacturing example 2, the fine corrugation profiles formed on the front and the back surfaces are aligned and bonding is performed similarly to the windshield manufacturing example 1.

### Calibration System Example

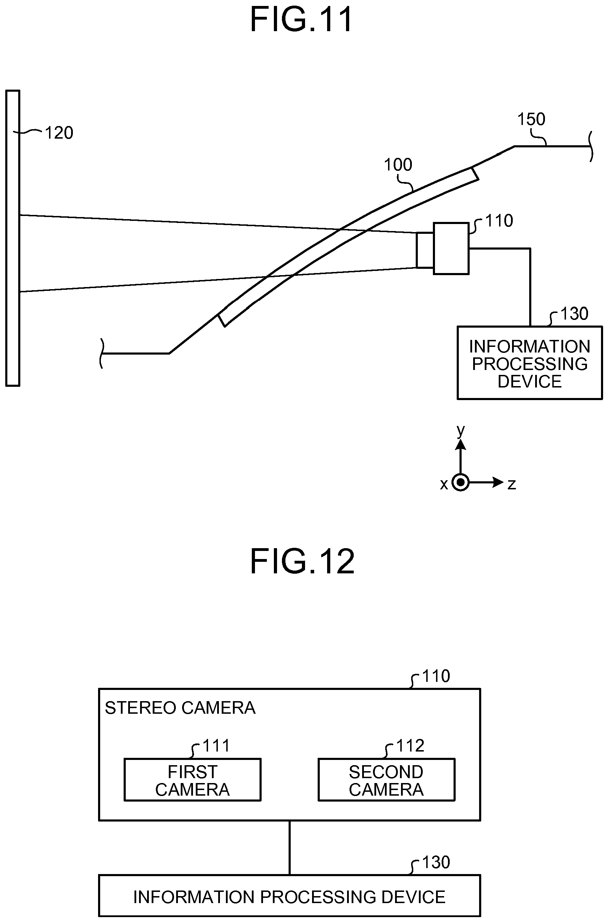

The following describes an exemplary calibration system used when the windshield 100 manufactured by the above-described manufacturing method is installed to a vehicle. FIG. 11 is an explanatory view illustrating an exemplary configuration of a calibration system in which a stereo camera 110 is disposed in a vehicle 150 with the windshield 100 according to the embodiment.

The windshield 100 is installed at the front of the vehicle 150, and the stereo camera 110 is mounted in the vehicle 150. A calibration chart 120 is disposed in front of the vehicle 150. The calibration chart 120 is disposed within the capture range of the stereo camera 110. The stereo camera 110 is coupled to an information processing device (calibration device) 130 to be described later.

The stereo camera 110 includes, as illustrated in FIG. 12, a first camera 111 and a second camera 112. The first camera 111 and the second camera 112 each include an optical system including a photoelectric conversion element such as a charge-coupled device (CCD), as generally used cameras do. The stereo camera 110 having such a configuration has functions to capture an image of an object (the calibration chart 120 in this example) to optically acquire the image and output the image as image data. The first camera 111 and the second camera 112 are different in base line direction and horizontal direction.

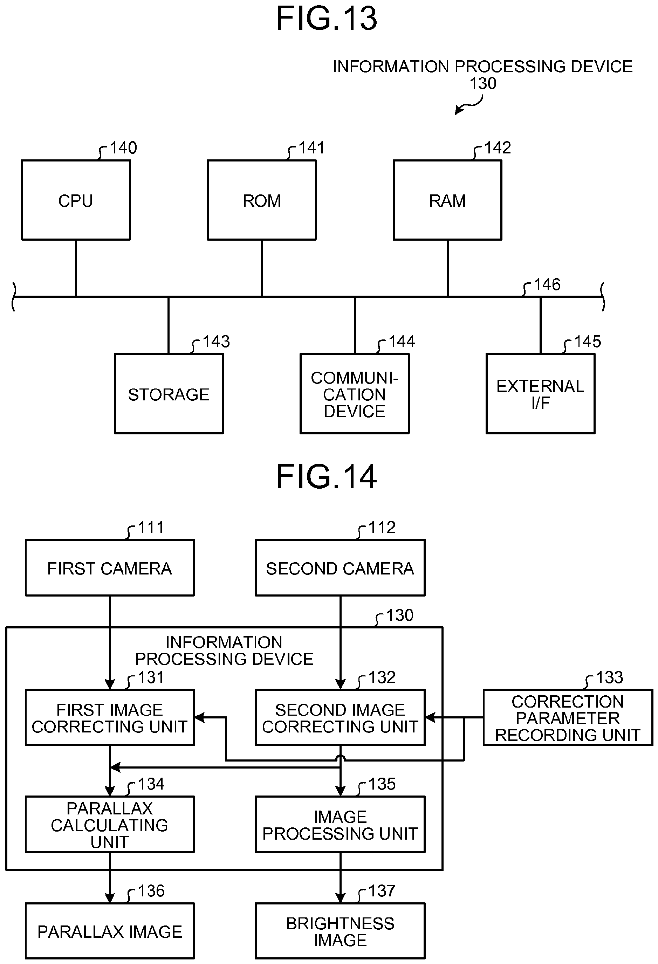

FIG. 13 is a block diagram illustrating an exemplary hardware configuration of the information processing device 130. The information processing device 130 includes a central processing unit (CPU) 140, a read only memory (ROM) 141, a random access memory (RAM) 142, a storage 143, a communication device 144, and an external interface (IF) 145. The CPU 140, the ROM 141, the RAM 142, the storage 143, the communication device 144, and the external IF 145 are coupled to one another with a bus 146.

The CPU 140 performs a predetermined control using the RAM 142 as a working memory in accordance with a control program stored in the ROM 141. The storage 143 is a hard disk drive (HDD) or a memory card, for example. The communication device 144 communicates with other devices through the external IF 145 by a wireless method, for example. The external IF 145 is an interface for transmitting and receiving data to and from other devices by a wireless method, for example.

FIG. 14 is a block diagram illustrating a functional configuration of the information processing device 130. The information processing device 130 includes, as functions for implementing a calibration device, a first image correcting unit 131, a second image correcting unit 132, a correction parameter recording unit 133, a parallax calculating unit 134, and an image processing unit 135. The information processing device 130 as a calibration device is described later in detail.

The first image correcting unit 131 acquires an image of the calibration chart 120 captured by the first camera 111, and corrects the image using a correction parameter recorded in the correction parameter recording unit 133. The second image correcting unit 132 acquires an image of the calibration chart 120 captured by the second camera 112, and corrects the image using a correction parameter recorded in the correction parameter recording unit 133. The correction parameter recording unit 133 is a non-volatile memory for recording a correction parameter for image correction processing. For example, the above-described storage 143 is used as the correction parameter recording unit 133.

The parallax calculating unit 134 calculates parallax from respective two images corrected by the first image correcting unit 131 and the second image correcting unit 132, and outputs a parallax image 136. Specifically, the parallax calculating unit 134 calculates position shift regarding the calibration chart 120 from the two captured images of the object. The image processing unit 135 restores a modulation transfer function (MTF) property that has been lowered, and outputs a brightness image 137.

With the configuration above, the images captured by the first camera 111 and the second camera 112 are geometrically corrected by the image correcting units 131 and 132, respectively, in accordance with a parameter recorded in the correction parameter recording unit 133. The first image correcting unit 131 and the second image correcting unit 132 correct the images to obtain pseudo images that would have been captured by the first camera 111 and the second camera 112 that are the same in base line direction and horizontal direction. Then, parallax in the horizontal direction is calculated so that precise parallax image 136 can be output. In addition, the image processing unit 135 restores the lowered MTF property to enable output of the brightness image 137 with improved resolution.

Part or all of the function blocks of the information processing device 130 may be implemented by hardware such as an integrated circuit (IC) instead of software.

A computer program executed by the information processing device 130 is preinstalled in the ROM 141 or other media and provided. The computer program described above may be recorded in a computer-readable recording medium such as a compact disc read only memory (CD-ROM), a flexible disk (FD), a compact disc recordable (CD-R), and a digital versatile disc (DVD), as an installable or executable file, and provided.

The computer program executed in the embodiment may be stored in a computer coupled to a network such as the Internet, and downloaded over the network and provided. Furthermore, the computer program executed in the embodiment may be provided or distributed over a network such as the Internet.

The computer program executed in the embodiment has a modular configuration including the above-described units. In actual hardware, the CPU (processor) 140 reads the computer program from the ROM 141 and executes the computer program, so that the units are loaded into and generated on a main memory.

The computer program of the information processing device 130 may be preinstalled and provided in the ROM 141 or other media.

### Calibration (Calibration Example)

The windshield 100 of the embodiment manufactured by the above-described manufacturing method has no local optical distortion with fine corrugations. The windshield 100 is thus particularly effective when used for a module, such as the stereo camera 110, the precision of sensing of which is affected by optical distortion.

However, when mounting the stereo camera 110 relative to the windshield 100, calibration may be disturbed due to an effect of, for example, positional relation between the stereo camera 110 and the windshield 100. Thus, calibration is needed when the stereo camera 110 is mounted in the vehicle 150. The following describes an example in which the position of an object image can be set to an approximately ideal position.

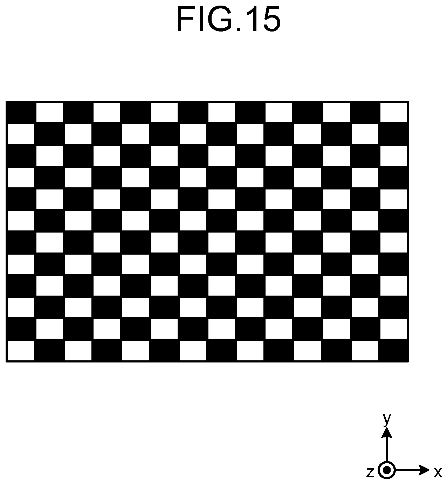

In the system illustrated in FIG. 11, the calibration chart 120 is disposed in front of the windshield 100 so that a pattern printed on the calibration chart 120 is projected on an imaging surface of the stereo camera 110. The pattern of the calibration chart 120 is a checker pattern as illustrated in FIG. 15. The pattern of the calibration chart 120 in FIG. 15 is used to perform a two-dimensional search in the x and y directions to acquire a deviation in calibration in the x and y directions of the stereo camera 110.

The calibration chart 120 is not limited to the checker pattern illustrated in FIG. 15. The calibration chart 120 may be of any pattern, such as a circular pattern, as long as a feature point can be extracted from the pattern. A smaller pitch of lattice points provides a larger number of corresponding points, enabling correct detection of local distortion of the windshield 100 that has not completely been eliminated due to misalignment generated in the manufacturing processes for the windshield 100 described above. On the other hand, the pattern of the calibration chart 120 with a smaller lattice pitch increase the possibility of false detection, and thus a small irregular pattern may be used instead. It should be noted that a smaller pattern of the calibration chart 120 as mentioned above increases the amount of information, increasing processing load. The size of a pattern of the calibration chart 120 is preferably large enough to fill the entire screen of the stereo camera 110. Using the information of corresponding points on the entire screen enables acquisition of correct deviation in calibration.

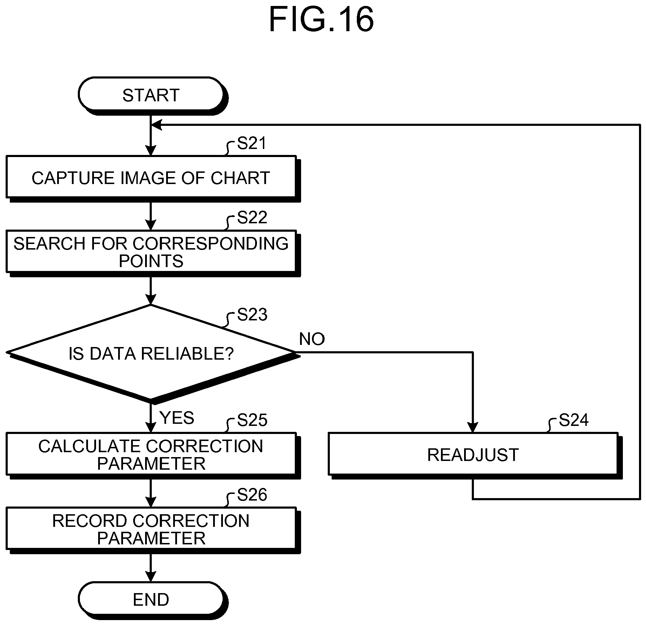

The following describes an example operation in the configuration of the calibration system described above and illustrated in FIG. 11 to FIG. 14. FIG. 16 is a flowchart illustrating a procedure of calibration according to the embodiment. First, the first camera 111 and the second camera 112 capture respective images of the calibration chart 120 (refer to FIG. 15) disposed in front of the vehicle 150 (step S21). Next, corresponding points are searched for on the captured images of the calibration chart 120 using feature points, for example. Differences (dx,dy) between corresponding positions in two-dimensional, that is, longitudinal and lateral directions (x,y) are acquired from corresponding points of the first camera 111 and the second camera 112 disposed on the left and right, respectively (step S22).

Subsequently, reliability of the captured images is determined (step S23). For example, white brightness of the pattern on the calibration chart 120 is extracted to check for occurrence of significant unevenness in the entire image region. Unevenness of brightness occurring on the calibration chart 120 affects precision of the search for the corresponding points.

If a result such as the one described above is output at step S23 and the data is determined not to be reliable (determination: No), readjustment of an environment regarding calibration with captured images of the calibration chart 120, for example, is performed (step S24). Thereafter, the procedure returns to step S21 and the capture of the calibration chart 120 and the following processes are performed again.

By contrast, if the images captured at step S23 are determined to be reliable (determination: Yes), the parallax calculating unit 134 calculates a correction parameter that corrects the difference dy between corresponding positions to be minimum, and corrects dx to be a parallax value corresponding to a mounting distance (step S25). Subsequently, the correction parameter obtained as described above is written in the correction parameter recording unit 133 (step S26) and the operation ends.

The above-described procedure enables calibration of the stereo camera 110 using the windshield 100 of the embodiment. Specifically, the calibration can correct, with higher precision, distortion that cannot be completely eliminated from the laminated glass 100 manufacture by the above-described manufacturing method. In this manner, according to the embodiment described above, an image (and distance information) with less distortion can be acquired through the windshield 100 in which an effect of distortion due to fine corrugations formed in the manufacturing of sheet glass is reduced.

Effects of the windshield 100 to the precision of the stereo camera 110 can be classified into effects of large distortion due to a glass material and the shape of the whole windshield 100, and effects of small distortion due to a small waviness profile formed on the glass described in the embodiment. Two sheets of glass are aligned and bonded in such a manner that fine corrugation profiles formed on the two sheets of glass for the front surface and the back surface are aligned, which can suppress generation of small distortion.

As described above, the windshield (laminated glass 100) in which effects of distortion are distributed to reduce the effect of small distortion, and through which images of a chart are captured to calculate a correction parameter from corresponding points of left and right cameras, is used, thus reducing the effect of large distortion. This configuration can provide the stereo camera 110 with high precision as a whole, with the effect of the windshield 100 being considered.

For a calibration method using a chart, a publicly known method such as that described in Japanese Patent No. 4109077 may be used. The method for correcting the effect of large distortion is not limited to a method using a chart. For example, calculation may be performed based on a preliminary measured result as described in Japanese Patent Application Laid-open No. 2015-169583, or may be performed using simulation software as described in Japanese Patent Application Laid-open No. 2015-163866.

The embodiment describes examples of the windshield 100 installed in the vehicle 150. The present invention, however, is not limited to the embodiment. The present invention is applicable to, for example, other devices such as a device that uses the windshield 100 and performs calibration using the stereo camera 110 and the information processing device (calibration device) 130.

## Claims

1. A method for manufacturing laminated glass (100), the method comprising:
cutting a first glass (100a) and a second glass (100b) out of one sheet of glass having a corrugation formed in a predetermined direction, in such a manner that corresponding sides of the first glass and the second glass are cut in a same cutting direction; and
bonding the first glass and the second glass together to form a windshield (10, 100), wherein the bonding is performed in such a manner that the corrugation of the first glass and the corrugation of the second glass lie on the front surface and the back surface of the windshield (10, 100) and match each other.

2. The method for manufacturing laminated glass (100) according to claim 1, wherein the cutting direction is parallel or orthogonal to the predetermined direction.

3. The method for manufacturing laminated glass (100) according to claim 1, wherein the first glass (100a) and the second glass (100b) that have been cut at the cutting are printed with respective alignment patterns used at the bonding, and, at the bonding, the alignment patterns on the first glass (100a) and the second glass (100b) are aligned with each other and the bonding is performed.

4. A laminated glass (100) obtained by any one of claims 1 to 3 comprising:
a first glass (100a); and
a second glass (100b),
the first glass (100) and the second glass (100b) having been cut out of one sheet of glass having a corrugation formed in a predetermined direction, in such a manner that corresponding sides are cut in a same cutting direction, and the first glass (100a) and the second glass (100b) having been bonded together to form a windshield (10, 100), wherein the bonding has been performed in such a manner that the corrugation of the first glass (100a) and the corrugation of the second glass (100b) lie on the front surface and the back surface of the windshield (10, 100) and match each other.

## Patentansprüche

1. Verfahren zur Herstellung von laminiertem Glas (100), wobei das Verfahren aufweist:
ein erstes Glas (100a) und ein zweites Glas (100b) werden aus einer Glasscheibe, die eine Wellung hat, die in einer vorbestimmten Richtung ausgebildet ist, in einer derartigen Weise, geschnitten, dass entsprechende Seiten von dem ersten Glas und dem zweiten Glas in einer gleichen Schnittrichtung geschnitten werden; und
das erste Glas und das zweite Glas werden zusammengebondet bzw. miteinander verbunden, um eine Windschutzscheibe (10, 100) auszubilden, wobei das Bonden bzw. Verbinden in einer solchen Weise durchgeführt wird, dass die Wellungen von dem ersten Glas und die Wellungen von dem zweiten Glas auf der vorderen Oberfläche und der hinteren Oberfläche von der Windschutzscheibe (10, 100) liegen und zueinander passen.

2. Verfahren zur Herstellung von laminiertem Glas (100) gemäß Anspruch 1, wobei die Schnittrichtung parallel oder orthogonal zu der vorbestimmten Richtung ist.

3. Verfahren zur Herstellung von laminiertem Glas (100) gemäß Anspruch 1, wobei das erste Glas (100a) und das zweite Glas (100b), die bei dem Schneiden geschnitten worden sind, mit entsprechenden Ausrichtungsmustern bedruckt sind, die bei dem Bonden bzw. Verbinden verwendet werden, und, bei dem Bonden bzw. Verbinden werden die Ausrichtungsmuster auf dem ersten Glas (100a) und dem zweiten Glas (100b) zueinander ausgerichtet und das Bonden bzw. Verbinden wird durchgeführt.

4. Laminiertes Glas (100), das durch irgendeinen der Ansprüche 1 bis 3 erhalten wird, das aufweist:
ein erstes Glas (100a); und
ein zweites Glas (100b),
wobei das ersten Glas (100) und das zweite Glas (100b) aus einer Glasscheibe, die eine Wellung hat, die in einer vorbestimmten Richtung ausgebildet ist, in einer solchen Weise herausgeschnitten worden sind, dass entsprechende Seiten in einer gleichen Schnittrichtung geschnitten sind, und das erste Glas (100a) und das zweite Glas (100b) sind zusammengebondet bzw. miteinander verbunden worden, um eine Windschutzscheibe (10, 100) auszubilden, wobei das Bonden bzw. Verbinden in einer solchen Weise durchgeführt worden ist, dass die Wellungen von dem ersten Glas (100a) und die Wellungen von dem zweiten Glas (100b) auf der vorderen Oberfläche und der hinteren Oberfläche von der Windschutzscheibe (10, 100) liegen, und zueinander passen.

## Revendications

1. Procédé de fabrication de verre feuilleté (100), le procédé comprenant :
la découpe d'un premier verre (100a) et d'un second verre (100b) dans une feuille de verre ayant une ondulation formée dans une direction prédéterminée, de telle manière que des faces correspondantes du premier verre et du second verre sont découpées dans une même direction de découpe ; et
le collage du premier verre et du second verre ensemble pour former un pare-brise (10, 100), dans lequel le collage est réalisé de telle manière que l'ondulation du premier verre et l'ondulation du second verre reposent sur la surface avant et la surface arrière du pare-brise (10, 100) et se correspondent.

2. Procédé de fabrication de verre feuilleté (100) selon la revendication 1, dans lequel la direction de découpe est parallèle ou orthogonale à la direction prédéterminée.

3. Procédé de fabrication de verre feuilleté (100) selon la revendication 1, dans lequel le premier verre (100a) et le second verre (100b) qui ont été découpés lors de la découpe sont imprimés avec des motifs d'alignement respectifs utilisés lors du collage, et, lors du collage, les motifs d'alignement sur le premier verre (100a) et le second verre (100b) sont alignés les uns avec les autres et le collage est réalisé.

4. Verre feuilleté (100) obtenu selon l'une quelconque des revendications 1 à 3 comprenant :
un premier verre (100a) ; et
un second verre (100b),
le premier verre (100) et le second verre (100b) ayant été découpés d'une feuille de verre ayant une ondulation formée dans une direction prédéterminée, de telle manière que les côtés correspondants soient découpés dans une même direction de découpe, et le premier verre (100a) et le second verre (100b) ayant été collés ensemble pour former un pare-brise (10, 100), dans lequel le collage a été réalisé de telle manière que l'ondulation du premier verre (100a) et l'ondulation du second verre (100b) reposent sur la surface avant et la surface arrière du pare-brise (10, 100) et se correspondent.
